# EUROPEAN PATENT APPLICATION

(11) **EP 4 382 262 A1**
(43) Date of publication of application: **12.06.2024**
(21) Application number: 22211538.8
(22) Date of filing: 05.12.2022
(51) Int. Cl.: B25J 9/12, B25J 13/08, B25J 17/00

(54) **ROBOT DRIVE MODULE**

(71) Applicant: Hexagon Technology Center GmbH, 9435 Heerbrugg (CH)
(72) Inventor: STEFFEN, Roman, 9445 Rebstein (CH); GOHL, Pascal, 8400 Winterthur (CH); HEINZLE, Lukas, 8820 Wädenswil (CH); WENK, Markus, 7000 Chur (CH)
(74) Representative: Kaminski Harmann

(57) **Abstract**

The invention relates to robot drive module (1, 1') for driving a rotary joint movement of a robot with at least a rotary drive and at least a rotary encoder (6, 6o, 6i) arrangement and a method for a robot having such a robot drive module (1, 1').

## Description

The invention relates to a robot drive module according to the independent claims.

Robots are replacing human beings in a growing number of tasks and fields. Some robots, often for example industrial robots have to be isolated during work to prevent personnel from being injured due to lack of safety measures for collaboration with people. In recent years, collaborative robots that can collaborate with people to complete specific tasks have gradually emerged for applications such as precision assembly, metrology or product inspection, medical surgery and other fields demanding a high precision control.

However, instead of repeated point-to-point positioning accuracy required for industrial robots in the past, such modern robots need full-range high precision control in the workspace -also in view of high safety demands in particular for collaborative or humanoid robots- for the driving of these devices, which is only possible if each joint of the robot is capable of providing high-precision position feedback and control. In fact, many known robotic drives lack mechanical precision and encoder accuracy to be used for high demanding measurement tasks such as metrological applications.

Joints or joint structures of known high-precision robots, e.g. collaborative or humanoid robots, are for instance formed by connecting a controller, a driver, a motor, a gear drive such as a harmonic gear box and in some cases a brake in series, and installing an angle or rotary encoder at a rear end of the direct-drive motor and an output end of the gear drive for position feedback and control.

Rotary encoders (hereinafter also called angle encoders or simply encoders) are widely used as sensor devices for detecting the rotational angle of a rotationally driven member with regard to the rotation axis, such as the joint drive units of a robotic apparatus.

When measuring rotation degree and position, a rotating part of the angle encoder rotates coaxially along with the measured axis, and determines the rotation angle and position relative to a fixed part of the angle encoder. That is, a rotary encoder has two units, for example an encoder stator disk and an encoder rotor disk, that are movable relative to one another along one degree of freedom about a measuring axis. The first unit is wholly or partly scanned by means of a scanning signal from a scanning unit attached at the second unit, with information about the angular position of the two units relative to one another being obtained. For example point encoders generally have a circular plate marked with several equidistant points all located on a single circle. During one rotation, a sensor counts the number of points that pass before the counting cell thereof, calculating therefrom the amplitude of the rotation effected. In principle, different physical operating principles, such as e.g. optical, magnetic or capacitive scanning or code capturing, are suitable for the measurement process, as e.g. disclosed in the US 6995836 B1 or US 6940278 B2.

Incremental and absolute rotary encoders are known. A disadvantage of systems with incremental determination of angles is that a zero or reference position must be assumed again after every restart of the angle measuring system. By contrast, absolute rotary encoders generate clearly differentiable scanning signals for each relative position of the subsystems rotatable in relation to one another. As a result, a respective relative position can be associated directly, i.e. without approaching a reference or initial position, with a unique angle.

In practice, there are deviations from an ideal location or ideal alignment of the two subsystems or units of the rotary encoder rotatable against one another, e.g. glass circle and optical sensors, due to manufacturing tolerances, installation tolerances or aging phenomena, which deviations cause errors when determining the rotary angle without corresponding compensation measures. By way of example, such deviations are eccentricities of the rotor disk and/or stator disk, deformations or tilts, which e.g. lead to irregular profile of the axial distance between the disks, or inaccuracies in the position code.

In the integrated joint of robot, due to angle measurement principles, limitation of installation space, as well as consideration of cost, the angle encoder usually measures the angle with the shafting structure in the joint. As a result, the angular encoder is very sensitive to the radial error of the joint shafting structure or gear backlash.

Said otherwise, to prevent measurement errors due to backlash or flexibility in gears, encoders are placed after the gear box in a motor/gear-setup. Usually, encoders are therefore mounted on the gearbox output axis as an independent module. This requires space and additional cabling which is a cumbersome issue for many applications.

High precision position feedback of an angle encoder can be enabled when the rotating part of the angle encoder is mounted on a joint shafting structure with high radial accuracy. It is important to ensure a high axial accuracy between especially an output end and an input end of the gear drive, high coaxial accuracy between the output end and the input end of the gear drive after installation is the key prerequisite for high-precision position feedback and control of an integrated joint of a robot.

However, for instance when subject to dead weight and loads, deformations can occur. For example, the output end of the joint may be displaced, e.g. perpendicular to the axis of the shaft system, so it is difficult to ensure the coaxial accuracy between the output end and the input end of the gear drive. That is, a bearing and/or a gear can tilt under strain and with a lever arm, this can result in additional kinematic parameters.

For example JP 2007-78552A teaches to convert the rotation of a primary rotary shaft into the rotations of two detection shafts by reduction gears with different reduction ratios and detect the rotational angle of each of the detection shafts with respective encoders, and then computing an absolute angle of the primary rotary shaft based on the difference between the detected rotational angles, thereby accurately detecting the rotational angle of the primary rotary shaft. However, it is necessary to provide two reduction gears with respect to the motor, and to provide respective encoders on the output shafts of each of the reduction gears, which leads in addition to a bulky configuration.

JP 2008-148412A teaches rotary joints with a relative angle encoder disposed on the input shaft of a reduction gear joined to the rotary shaft of a motor, and an absolute angle encoder disposed on the output shaft of the reduction gear. A relationship regarding the error that may be produced between the detection value of the relative angle encoder and the detection value of the absolute angle encoder is acquired in advance, and this relationship regarding the error is used to correct the detection result of the absolute angle encoder. However, besides the need of two encoders, if the detection accuracy of the relative angle encoder is low, the accuracy of the final detection result of the rotational angle of the motor likewise will not improve, and thus this configuration is not necessarily appropriate for ensuring high detection accuracy.

Thus, the object of the present invention is to provide an improved robot drive module for a rotary joint.

A further object of the present invention is to provide a compact, high precision robot drive module for a rotary joint.

These objects are achieved in accordance with the invention by the characterizing features of the independent claims or by features of the dependent claims, and these solutions are also developed by features of the dependent claims.

The present invention relates to robot drive module for driving a rotary joint movement of a robot, such as a metrological robotic device and/or humanoid robot. The drive module comprises a rotary drive comprising a motor circuit board, a stator, and a rotor, wherein the rotor is configured to rotate - controlled by the motor circuit board - relative to the stator about an axis of rotation. The drive module further comprises a gearbox e.g. cycloidal, strain wave or planetary gearbox, configured to transform - according to a defined gear ratio - a rotary motion of the rotor about the axis of rotation into a rotary motion of a gearbox output component about the axis of rotation, wherein - axially with respect to the axis of rotation - the motor circuit board and the stator are arranged on one side of the gearbox, denoted gearbox input side, and the gearbox output component engages the gearbox from the other side of the gearbox, denoted gearbox output side. Above that, the drive module comprises a rotary encoder configured to detect a rotation of the gearbox output component about the axis of rotation.

Further, the drive module comprises a connecting part, e.g. an integral part of the gearbox output component or a part like an axle rigidly fixed to the gearbox output component, which extends from the gearbox output side to the gearbox input side and is configured to pick up the rotation of the gearbox output component in a rigid manner, thereby providing rotation of the connecting part identical or conforming to the rotation of the gearbox output component, whereby the rotary encoder is arranged on the gearbox input side and configured to detect or measure a rotation of the connecting part about the axis of rotation.

Optionally, the connecting part extends past the gearbox in an area located radially on the inside of the gearbox, e.g. an area which is closer to the axis of rotation as the area occupied by the gearbox.

As another option, the rotary encoder comprises a code carrier and a sensor arrangement, for instance an optical, e.g. glass, circular encoder and the sensor arrangement is configured for optical detection of the code carrier. The code carrier and the sensor arrangement -the latter being optionally arranged on the motor circuit board- are rotatable with respect to one another about the axis of rotation, and the sensor arrangement is configured to provide derivation of a rotary position or a change in rotary position of the code carrier relative to the axis of rotation, wherein the code carrier is arranged on a distal end of the connecting part on the gearbox input side.

In some embodiments, the robotic drive module comprises a hollow part axially extending, in particular completely, through the robotic drive module and being located radially on the inside of the gearbox, e.g. an area which closer to the axis of rotation as the area occupied by the gearbox, e.g. for cable feed through the hollow space.

As a further option, the drive unit comprises a magnet at one distal end of the hollow part and a hall sensor on the motor circuit board for measuring an absolute rotary angle.

As still another option, the robotic drive module comprises a further (second) rotary drive comprising a (second) stator and a (second) rotor, wherein the rotor is configured to rotate relative to the stator about the axis of rotation. The stator of the further rotary drive (second stator) is arranged on a side of the motor circuit board facing away from the gearbox, and the stator of the (above mentioned first) rotary drive (first stator) is arranged on a side of the motor circuit board facing towards the gearbox. The second rotor of the further rotary drive axially extends from the gearbox input side to the gearbox output side in an area located radially on the inside of the (first or outer) rotary drive, e.g. an area which is closer to the axis of rotation as the area occupied by the (first or outer) rotary drive. The drive module comprises a further (or second) rotary encoder configured to provide detection of a rotation - about the axis of rotation - of a rotating component driven by the further (second) rotary drive, wherein a sensing part of the further rotary encoder is arranged on the motor circuit board on the side of the motor circuit board facing away from the gearbox.

Optionally, the (at least first) rotary drive is configured to use position information from the (first and/or second) rotary encoder to control movement of the rotor.

As another option, the robot drive module comprises a rotation sensor configured to sense motor rotation and provide control data for driving movement of the rotor, e.g. wherein the rotation sensor is embodied as hall sensor and/or wherein the rotation sensor is configured to provide the control data based on magnetic feedback from motor coils of the rotary drive.

In a second aspect, the present invention also relates to a robot drive module for driving a rotary joint movement of a robot, particularly a metrology robot and/or humanoid robot, wherein the drive module comprises two rotary drives, each of the two rotary drives comprising a stator and a rotor configured to rotate relative to the stator, wherein the rotors of the two rotary drives are configured to rotate about a common axis of rotation, and a rotary encoder arrangement configured to detect an associated rotation for each of the two rotary drives

The drive module in addition comprises a motor circuit board configured to control both of the two rotary drives independently from each other, whereby the motor circuit board and the two rotary drives are arranged that - axially with respect to the axis of rotation - the stator of one of the two rotary drives, denoted inner rotary drive, is arranged on one side of the motor circuit board, denoted inner side, and the stator of the other of the two rotary drives, denoted outer rotary drive, is arranged on the other side of the motor circuit board, denoted outer side. The module further comprises a rotating component driven by the inner rotary drive (e.g. the rotor of the inner rotary drive or a gearbox output in case the inner rotary drive comprises a gearbox) axially extending from the inner side to the outer side in an area located radially on the inside of the outer rotary drive, e.g. an area which is closer to the axis of rotation as the area occupied by the outer rotary drive and the rotary encoder arrangement comprises two rotary encoders. One of the two rotary encoders is configured to provide detection or measurement of a rotation - about the axis of rotation - of the rotating component driven by the inner rotary drive, wherein a sensor arrangement of one of the two rotary encoders is arranged on the motor circuit board on the inner side, and the other of the two rotary encoders is configured to provide detection of a rotation - about the axis of rotation - of a rotating component driven by the outer rotary drive, wherein a sensor arrangement of the other of the two rotary encoders is arranged on the motor circuit board on the outer side.

Optionally, each of the two rotary encoders comprises a code carrier, wherein the code carrier is rotatable with respect to the motor circuit board about the axis of rotation and the sensor arrangement is configured to provide derivation of a rotary position or a change in rotary position of the code carrier relative to the axis of rotation, in particular wherein the code carrier is an optical, e.g. glass, circular encoder and the sensor arrangement is configured for optical detection of the code carrier.

In some embodiments, at least one of the rotary drives is configured to use position information from the rotary encoder to control movement of the rotor.

As another option, the drive module comprises a hollow part axially extending completely through the drive module and being located radially on the inside of the inner rotary drive, e.g. an area which is closer to the axis of rotation as the area occupied by the inner and outer rotary drive, e.g. for cable feed through. As a further option, there is a magnet at one distal end of the hollow part and a hall sensor on the motor circuit board for measuring an absolute rotary angle.

Optionally, at least one of the rotary drives comprises a rotation sensor configured to provide control data for driving movement of the rotor, e.g. wherein the rotation sensor is embodied as hall sensor or wherein the rotation sensor is configured to provide the control data based on magnetic feedback from motor coils of the rotary drive.

The present invention also relates to a method for a robot with a robot drive module having a code carrier and a sensor arrangement as described above with determining a change in relative position of the sensor arrangement and the code carrier with respect to each other and, based thereof, determining a measurement value (position value and/or orientation value) providing information on a deflection and/or rotation amount of the code carrier in a radial and/or axial direction with respect to the axis of rotation, in particular on at least one of a deflection of the code carrier in a radial direction relative to the axis of rotation, a deflection of the code carrier in the direction of the axis of rotation, and/or a tilting of the code carrier with respect to the axis of rotation.

The method further comprises detecting a, in particular radial, force and moments, e.g. determining quantum, direction and/or point of force application, exerted on the robot drive output axis based on the measurement value(s) and a deformation model of the robot drive module. As an additional option, a deformation of the robot, e.g. place, direction and/or degree of deformation is determined based on the measurement value(s) and a deformation model.

Optionally, the method comprises monitoring a history of the measurement value or of a value derived therefrom, for example a torque or force value, and based thereon triggering a specific (re-)action or behavior or program of the robot, in particular a reduction or stop of robot (member) movement or drive torque, for example as a programed countermeasure to compensate the force or torque exerted on the robot and/or deformation of the robot (member). Thereby, for example a threshold criterion can be applied, e.g. when trespassing a predefined euklidean distance of the code carrier, a motion stop is triggered.

As an option, the method comprises deriving an information about the environment, in particular to detect an obstacle, based on the detected exerted force, moment or deformation and adapting a programed or scheduled behavior or action of the robot based on the information about the environment.

As still another option, the method comprises deriving an information about health of a mechanical component of the robot based on the determined measurement value.

Optionally, the method comprises a self- or in-the-field-calibration of the deformation model and/or of a transfer function between measurement value and force and/or torque moment. The calibration comprises positioning a known mass coupled to the robot drive module (axis) in different known positions relative to the robot drive module (axis). For example, an object of defined mass (distribution) is attached to the drive module resp. a robot member driven by the drive module and the drive module drives the member in different positions. However, also a known (own) mass of a member of the drive module or robot itself can be used for calibration. In each relative position, the change in relative position of the sensor arrangement and the code carrier with respect to each other and/or the mesurement value providing information on a deflection amount of the code carrier in a radial and/or axial direction with respect to the axis of rotation is determined and therefrom an absolute force or torque moment value is derived.

The present invention also relates to a computer program, which is stored on a machine-readable carrier, or computer data signal having program code, for controlling and/or carrying out the method according to the invention, in particular when the program is executed in a control and analysis unit of a robot.

The robot drives and method according to the invention will be described in greater detail hereinafter, purely by way of example, with reference to exemplary embodiments depicted schematically in the drawings.

More specifically, in the drawing
- Fig.1: schematically show a first exemplary embodiment of a robot drive module with a connecting part for gear rotation feedback,
- Fig.2: schematically show a second exemplary embodiment of a robot drive module with a connecting part for gear rotation feedback,
- Figs. 3a,b: shows another embodiment of a robot drive module with dual axis drive,
- Fig. 4: shows in a cross-sectional 3D-scheme a possible application of a dual-axis drive module,
- Figs. 5a-e: illustrate schematically a mechanical interface for mounting of a robot drive module and
- Figs. 6a,b: illustrate schematically a method for a robot drive joint for force or deformation determination.

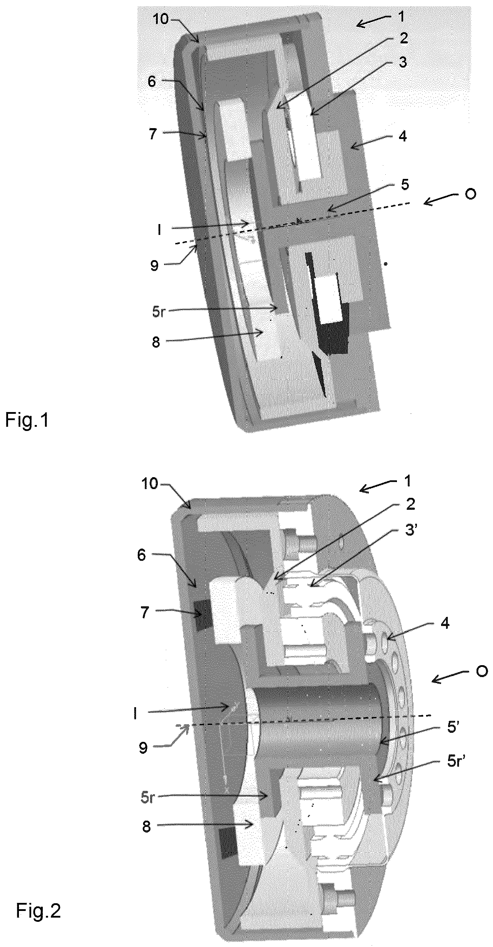

Fig. 1 shows in a 3D-cross sectional view a first example of a robot drive unit 1, e.g. for a metrological robot such as a and/or humanoid robot with high precision measuring instruments such as a metrologic laser scanning unit. The drive unit 1 comprises inside a housing 10 an electric motor with a rotor 2 (the stator is not depicted). For transmission of the rotor movement, the drive unit 1 further comprises a gearbox 3, for example a cycloidal gear as in principle known in the art. The gearbox 3 picks up the rotor rotation on its gearbox input side or primary side I (in the figure on the left) and transmits the rotation to its gearbox output side or secondary side O (in the figure on the right). A gear output axis or flange 4 is arranged at the gearbox output side O.

The drive module 1 further comprises an angle or rotary encoder 6 with a scale 8 and a sensing part 7 for measuring a rotation or rotational position of the gearbox 3 resp. for measuring a position of the output axis 9. In contrast to known embodiments, the rotary encoder 6 is arranged on the input side I of the drive unit 1 resp. gearbox 3 (i.e. arranged on the left in the figure).

Therefore, the encoder 6 is connected to the output side O by a connecting part 5. In the example, the connecting part 5 is embodied as a shaft in the center of the drive unit 1 which connects the flange 4 with the scale 8. The scale 8, arranged on the inside distal end of connection shaft 5 is for example embodied as a glass ring or circle as part of an opto-electronic angle encoder 6, with the ring or circle plane perpendicular to the axis of rotation or output axis 9. Alternative measurement principles can for example be magnetic or capacitive ones as in principle known in the art. The glass ring 8 is rigidly attached to the connection shaft 5 by a shaft extension or shaft disc 5r which extends parallel to the glass circle 8 at the input side I as depicted.

Thus, the output rotation of the gear 3 is transferred or returned to the input side I by the connection 5 and the encoder scale 8 rotates identically to the gear output rotation. The axis 9 going through the motor axle is connecting the gear output with the encoder disc 8, bringing the output rotation to the high precision encoder 6. Hence, by reading or sensing scale 8 with the encoder's sensor arrangement 7, the gear output rotation can be measured.

Alternatively to the depiction, the shaft disc 5r can be embodied itself as a code carrier or encoder rotor disk resp. can comprise scaling features which can be read or sensed by encoder sensors 7, e.g. optical scale elements. As another example, one or more magnets are attached to the inside end of shaft 5 to be sensed by a hall sensor situated at the PCB, an encoder arrangement which allows for absolute rotary angle measurement.

As indicated in the figure, the encoder's sensing part resp. the active part of the encoder 6 is arranged on the left inner side of the housing 10. For example in case of an opto-electronic measurement principle, a light emitting and receiving unit is arranged on a PCB for emitting light towards the glass ring 8 and receiving light reflected back from code elements of ring 8.

With the shown configuration, the encoder glass circle 8 can be mounted directly above the motor PCB. Thus, the arrangement allows to place the encoder sensors 7 on same PCB as the motor electronics. Therefore, a single PCB is sufficient and the drive unit 1 has a compact, space minimized design.

A motor controller of the robotic drive unit 1 can be programmed to use the position information from the rotary encoder 6 to control the motor commutation. Thereby, the design with only one, common PCB, i.e. integration of the encoder electronics on the motor circuit board, facilitates the arrangement for such a motor control using the output of the integrated rotary encoder. Additionally or alternatively, motor control by rotational position information can be implemented by an additional (low-accuracy) rotation sensor situated at the motor rotor side, i.e. before the gear 3, as in principle known in the art. For example, a single hall sensor, e.g. arranged as mentioned above, covering only one "coil interval" (360°/n coils) and/or a magnetic feedback of motor coils is used for motor control.

Fig. 2 shows another example of a robotic drive module 1 with a housing 10 in a cross-sectional 3D-view. In this exemplary embodiment, again, the torque of a motor rotor 2 is transmitted to a flange 4 on a gearbox output side O by a gear 3', e.g. an (elliptical) strain wave or harmonic gear.

A connection shaft 5 in the inner of the drive unit 1, elongating inside the drive unit 1 along the drive unit axle, is fixed to the flange 4 on its distal end on the output side O (right side of figure) and fixed to a circular code scale 5 on the input side I (left side of figure) by respective ring-like protrusions 5r, 5r'. The code scale 5 is part of an angular encoder 6 and can be read by sensor elements 7 arranged at the input side I on a PCB facing the scale 5.

In this example, the connector 5 is hollow or seen otherwise, the motor axle 9 is hollow. Such a hollow connection shaft 5 resp. hollow motor axle 9 is advantageous e.g. for cable feed through. For example, the inner space provided by such a tubelike connector 5 which connects gear-output to the angle encoder 6 can be used for electrical connection to or from the PCB on the input side I to the output side O.

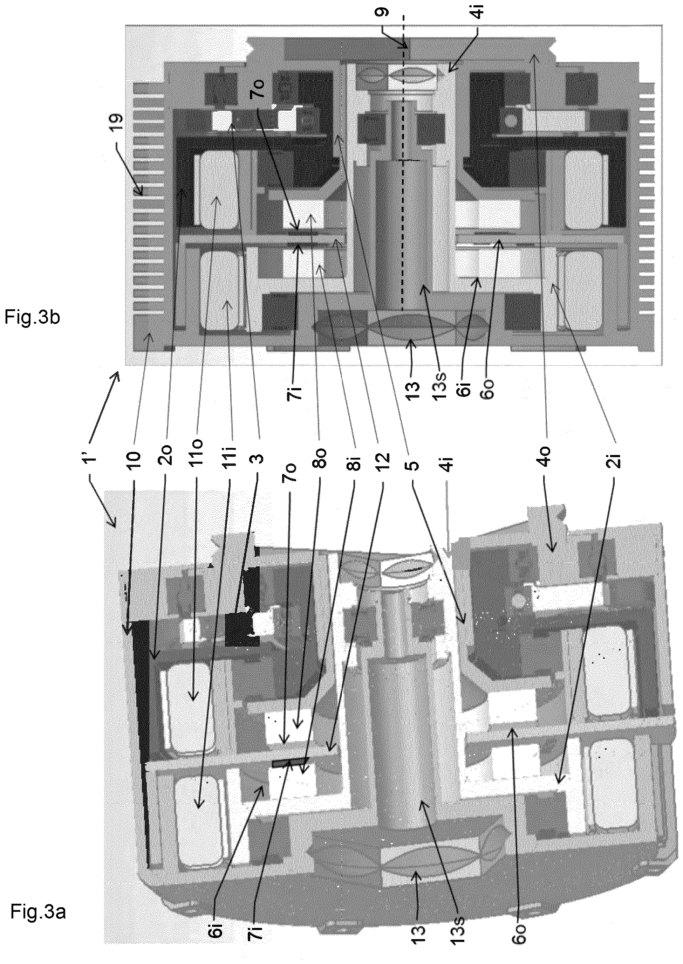

Figs. 3a,b shows another embodiment of a robotic drive joint 1' in a 3D-cross sectional view (figure 3a) and 2D-cross sectional view (figure 3b).

Like the examples depicted in figures 1 and 2, the drive unit 1' comprises a motor -here denoted outer motor- with an (outer) stator (coils) 11o and (outer) rotor 2o, the rotation of which is in the example transmitted by a gear 3 such as a cycloidal gearbox to a gear output 4, for example for driving a first robot part. As explained in more detail above, the gear output side rotation is transferred conformingly to the inner side via a rigid connection 5 to a (first) encoder 6o or more precisely to a (first) scale 8o such as a circular glass scale. The first scale 8o can be sensed by a sensing part 7o of the first encoder 6o arranged at a PCB 12 in the inner of the drive unit 1', e.g. integrated in a motor circuit board.

Above that first or outer motor arrangement with gear 3 and encoder 6o for reading the gear's output rotation at the gear's input side, the drive unit 1' comprises a second or inner motor arrangement (situated at the left in the figure), therewith being a dual axis drive unit 1'. The inner motor comprises an inner stator 11i and an inner rotor 2i which is led to the output side of the drive unit 1' (right side) likewise the outer motor arrangement. However in contrast to the outer drive without gear transmission, therewith providing a direct inner motor output 4i, for example for driving a second robot part.

The drive unit 1' further comprises a second encoder 6i for measuring the rotation of the inner motor resp. inner rotor 2i. This "inner" encoder 6i comprises a scale 8i, too, e.g. a glass circle or other form of a code carrier as known in the art. The scale 8i is read by a sensor 7i. The second sensor(s) 7i is arranged on the other side of PCB 12 as the first sensor(s) 7o, hence, the drive unit 1' comprises a "central" PCB, which can also comprises the motor circuit, with encoder sensors 7i, 7o on both sides. Therefore, only one static PCB 12 and only one micro controller for all motors as well as encoders for two independent motors or drives is needed.

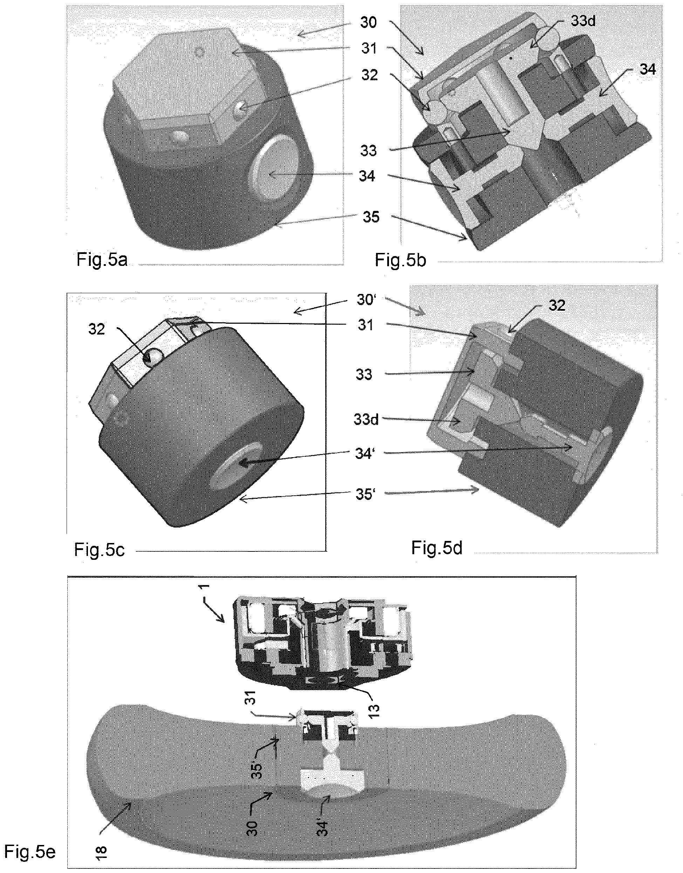

The drive unit 1' further comprises a static electrical and mechanical interface 13 with an electrical or magnetic connector, which can be embodied for example for attachment by snapping (see "klick" interface described with respect to figures 5a-e below) or by screwing, with hollow central shaft 13s, e.g. for cable feed through, and can comprise an integrated cooling as schematically indicated by gills 19. Thus, a dual axis drive unit 1' with a common housing and interface 13 for two drives is provided.

This dual axis drive unit 1', with or without a gearbox 3, shows a relatively simple static interface (regarding electric cabling and mechanics) and further provides the advantages that the last movable element is fully 360° operatable without any cabling limitations. Both drives can be nonstop rotated about rotation axis 9 a complete rotation with mutual independent speed and direction. Thereby, each output is sensor controlled regarding angle, torque and/or force by a respective angle sensor 6i, 6o, thus controlled.

The dual axis drive module 1' may be modified or show additional features such as mentioned with regard to the embodiments described with regard to figures 1 or 2, e.g. an additional (low-accuracy) rotation sensor situated at a motor rotor side.

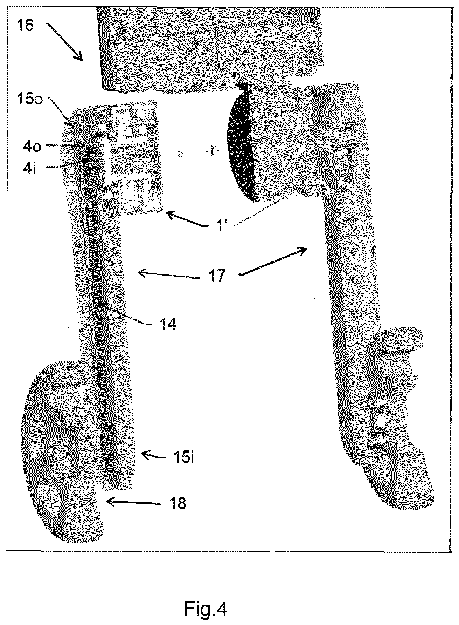

Fig. 4 shows in a cross-sectional 3D-scheme a possible application of a dual-axis drive unit 1' as described above. The figure shows a (lower part of) a robot 16 with wheeled legs 17, each leg 17 driven by a dual-axis drive unit 1'.

The leg joints 15o and 15i of a respective leg 17 are driven by the outer output 4o respectively inner output 4i of the dual-axis drive unit 1'. Thereby, the inner output 4i is transferred via a transmission 14, e.g. a belt, to the lower joint 15i for driving a wheel 18.

Due to the compact design of the drive unit 1' with dual-encoder control, the both joints 15o and 15i can be driven independently of another about 360° or beyond each and with high precision.

Figs. 5a-e illustrate schematically examples of a mechanical interface 30, 30' for fastening a joint drive unit 1, for example to a caterpillar chain wheel, arm or a robot wheel 18 as depicted in cross-sectional view 5e. Figures 5a,b illustrate a first exemplary interface 30, figures 5c,d a second exemplary interface 30', in each case in a 3D-view and a cross-sectional view.

The interface 30, 30' comprises in each case a housing 35, 35' and a hexagonal snap part 31 on "top". The hexagonal top part 31 is able to transfer torque due its angular (not-round) design and comprises shiftable balls 32, e.g. one at each side of the hexagonal prism 35.

The balls 32 are pushed or forced outwards by a T-like or "mushroom" shaped pin 33 situated inside, thereby snapping into the "mother" counterpart on the joint drive 1 as depicted in figure 5e. Thus, in the example, the joint drive 1 can be demountably fastened to wheel 18.

The joint drive unit 1 can be easily demounted by pushing one or more buttons 34, 34' with a push face situated on the side of housing 35 (exemplary 30, release mechanism on a radial position, figures 5a,b) resp. on the "bottom" (exemplary 30', release mechanism on a axial position, figures 5c,d,e), which comprise protrusions ranging into the center of the interface 30, 30' and contacting the T-pin 33. When pushing a button 34, 34', the T-pin is lifted. The top disc 33d of T-pin 33 is shaped (partly) conically or tapered on its "bottom" side, such that when the pin 33 is lifted by pushing button(s) 34, the balls 32 are discharged or unloaded and can move freely to the inside, thus releasing the interface connection.

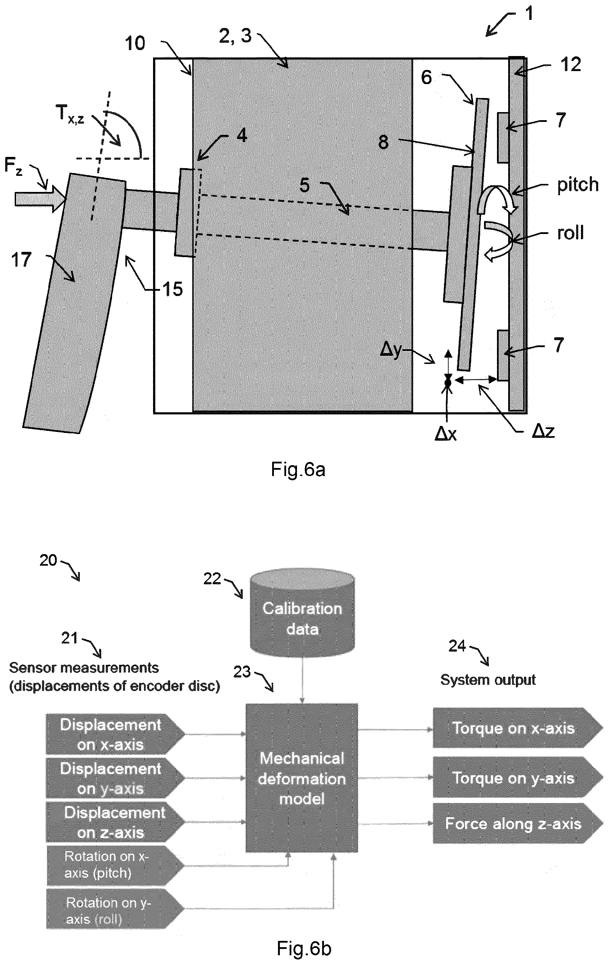

Figs. 6a,b illustrate schematically a method 20 for a robotic drive joint 15 with a drive unit 1 having an integrated rotary encoder 6 as depicted in a cross sectional 2D-view in figure 6a, whereby method steps are illustrated in figure 6b.

The drive unit 1 is basically designed as described above, i.e. having within a housing 10a motor 2 and gearbox 3 and a rotary encoder coupled to the gear output 4 by a connection rod 5 and situated on the gear input side. The encoder 6 comprises a code carrier 8 such as a glass scale which is e.g. opto-electronically sensed by sensors 7 arranged at a PCB 12 on the input side.

The drive unit 1 is arranged for driving a robot joint 15 resp. a robot member such as a robot arm or a robot leg 17 as illustrated in figure 4 above or any other robotically driven rotary member e.g. robotic measuring devices such as a motorized total station or robotic coordinate measuring machine.

A force acting on the joint 15 resp. drive module 1 can lead by coupling connection 5 of the joint's rotary encoder 6 to the joint 15, to a displacement of the code carrier 8 with regards to the sensor arrangement 7 other than the one intended (rotational) degree of freedom, illustrated as shifts Δx, Δy, Δz, pitch or roll in the figure. For example, because of a force acting on the robot leg 17, it may endure a deformation, e.g. deflection or bending and/or a displacement or torsion in at least one of the six degree of freedom.

According to the method, for example displacements Δx, Δy, Δz of the code ring are determined, e.g. at each sensor read head 7. From these values Δx, Δy, Δz, also pitch and roll angle (changes) with respect to the encoder board 12 can be determined (in addition to the "main" measurement value, that is the yaw angle) and taken into account for determining the active force F_{z} in z-direction as well as torques Tₓ, T_{y} in x-resp. y-direction exerted on the output axis of drive 1 and/or for determining said robot member deformation, that is joint/member displacement T and/or member bending D. That is, changes in position of the code carrier 8 relative to the sensor base/PCB 12 with regard to other degree of freedoms than the intended rotation about the shaft 5/z-axis, in particular with regard to all six possible DoFs- and thus of a first robot member, representing the code carrier, relative to a second robot member, having the sensor base 12 - are determined and evaluated for detecting a force F_{z} and moments Tₓ, T_{y} and/or taken into account when deriving the exact relative position of the members with respect to one another. Such changes are a displacement of the code carrier 8 with respect to the sensor arrangement 7 in a - with respect to the axis of rotation - radial direction, a displacement of the code carrier 8 with respect to the sensor arrangement 7 in a - with respect to the axis of rotation - axial direction and/or a tilting of the code carrier 8 relative to the sensor arrangement 7.

Therefore, for example an opto-electronic rotary encoder 6 comprising code carrier 8 and a sensor arrangement 7, wherein code carrier 8 and sensor arrangement 7 are rotatable with respect to one another about a defined axis of rotation as a first degree of freedom, provides a code projection dependent on the three-dimensional position of the code carrier 8 relative to the sensor arrangement 7 which is produced on the sensor arrangement 7. At least part of the code projection is detected by said sensor arrangement 7. As already mentioned, the rotary encoder 6 can be constructed in a manner known per se from a code carrier 8 rigidly connected to the receptacle 5 and having an optically detectable code, which can be embodied, for example, as a code-carrying glass or plastic disk having a code extending in a circumferential direction. The sensor arrangement 7 consists of one or more detector elements and serves for detecting the code projection. For this purpose, the sensor arrangement 7 can have, for example, four read heads, e.g. arranged as two pairs of opposite read heads distributed pairwise between 60°-70° apart (two of the read heads are indicated in cross sectional figure 6a) respectively having a line arrangement of optical detector elements. The code carrier 8 is assigned as code carrier with a code disk functioning as "measurement table" and can have a multiplicity of pattern elements arranged in a manner strung together, wherein the pattern elements are embodied - e.g. in form of a transparent or reflective triangle each- in such a way that the code projection is suitable for the additional reading of changes in position in the non-rotation direction.

In other words, in addition to an angular position, further positions of the first member with respect to the second member are taken into account when determining the relative measurement position. That means that the three-dimensional position or position changes Δx, Δy, Δz, roll, pitch of the code disk 8 relative to the sensor arrangement 7 is determined as "core" measurement values which all other values can be computed from, for example from a shadow casting of the code disk 8, wherein the code disk 8 functions like a tabletop whose shadow produced on the floor by a ceiling light is dependent on its standpoint and its inclination relative to the floor.

The determined displacements and/or tilting Δx, Δy, Δz, roll, pitch of the code carrier 8 in the non-rotation direction are then considered as (further) position variables or values in addition to the angular position and for example fed (reference sign 21 in figure 6b) into a mechanical deformation model 23, in particular a deformation model 23 of the robot drive unit itself, together with calibration data 22, whereby for instance a superordinate robot evaluation unit calculates torque on x-axis and y-axis T_{x,y}, and the enacting force F_{z} (quantum, direction and/or point of action) therefrom.

As encoder position changes to be determined and considered it is possible to determine for example a radial displacement direction Δx, Δy and a radial displacement extent, an axial displacement extent Δz and a tilting direction and a tilting angle (pitch and roll). Such position changes - optionally alongside further robot member position measurement variables designating the position of a robot member 17 - are related to one another, from which e.g. a position of or a force or moment on the robot component 17 or drive unit 1 is derived. Thereby, model parameters such as elasticity Eₓ, E_{y} and/or E_{z} along a respective (x, y or z) axis can be taken into account for calculation, e.g. for mechanical deformation formulas such as torque Tₓ or T_{y} relative to x or y-axis in form of Tₓ=Δx/Eₓ as a simple example for correlating torque and encoder (scale) deviation.

As said, determination of the force F_{z} exerted on the robot member or deformation of the robot member 17 can both be based on model-based approaches, in which the geometrical and material-dependent variables of the connection elements, such as e.g. elasticity Eₓ, length, inherent weight or an external weight having an effect, are taken into account, e.g. based on simulation results.

It is also possible to use calibrations, in which case known positions and orientations are assigned corresponding position values, which, for their part, can again supply a basis for a descriptive or transfer function or else can also be stored in look-up tables. For example, there is a calibration of a transfer function in that an absolute force applied to the drive module is calibrated, e.g. how many Newtons is required to move or tilt a robot joint by a defined length such as a certain number of micrometers, i.e. a known force at a known position leads to measureable Δx, Δy, Δz, pitch, roll values.

Thereby, calibration can be a factory calibration and/or an automatic self-calibration, can be device/robot specific or individual and e.g. with (additional) calibration measurements being effected in selected measurement positions and/or defined force application using calibration masses or actuators on the basis of a modeling, for example also considering gravitation effects. Moreover, variables determined by other sensors, such as e.g. temperature sensors, can also be used supplementarily in the model. Possible calibration procedures can comprise self-calibration leveraging gravitation and centrifugal forces applied on system without added weight, self-calibration by lifting a known weight in a programmed motion path (generating different gravitational and/or centrifugal forces), applying a known force in a calibration jig (in factory) and/or using a "golden" calibration for all units (this standard calibration is generated by one of the above procedures). A known weight or mass distribution is for example an inherent weight or dead load of a robot arm or leg coupled to the drive module or an external reference object/calibration mass lifted by a robot arm.

In model-based approaches, depending on the embodiment of the connection element 5, the latter can be regarded as rigid or else as deformable within limits. Accordingly, any change can be regarded as occurring only in the articulated joint 15 or the connection arrangement 5 or else a change in a component 17 is also considered.

It is thus also possible to model the fact that, depending on the arrangement of rotary encoder axis and orientation of the member 17 and with knowledge of the inherent weight of the connection element 17 and depending on the orientation of adjacent connection elements or members, division into position-governed and deformation-governed portions is also effected. Thus, deformations of individual components of a robot can also be identified and determined in terms of their effect.

Hence, the quantified drive unit resp. encoder (de-)locations Δx, Δy, Δz, pitch, roll regarding further, in particular all six Dofs of code disk 8 can be used to derive therefrom information about a state of a superordinated robot part or system or of the robot as a whole. For example, it can be derived from x-axis, y-axis, z-axis, pitch and roll encoder displacements what force acts where at the system and/or which deformation effects occur at system level. According countermeasures then can be enacted to even out an external force or compensation of a deformation.

As another option, the additional encoder measurement values Δx, Δy, Δz, roll, pitch or a value derived therefrom can be monitored over time and based on the value history, a specific behavior or reaction of the robot can be triggered, e.g. for an above mentioned compensation. Such a reaction is for example a reduction or stop of a movement or torque applied by the drive unit 1. Thereby, a threshold criterion can be used, whereby the threshold may be derived from the value history and/or dynamically adapted based thereon.

As another example, encoder position values Δx, Δy, Δz, roll, pitch or a value derived therefrom such as force F, moment T_{x,y} or deformation can be used as information about the environment of the robot. For example, they can indicate presence of an obstacle in the movement path of the robot member 17. Then, the robot control is configured to adapt a programmed action of the robot (member) based on the information. For instance, a movement is altered to circumvent the therewith detected obstacle in the surrounding of the robot.

It is also possible to use said position values Δx, Δy, Δz, roll, pitch for deriving an information about health of a mechanical component of the robot, in particular when looking at above mentioned history of position values. For instance, a value shift in course of time is regarded as indication of wear of a component of the robot, e.g. of a bearing of member 17 resp. drive unit 1. Also, if a defined threshold is exceeded, a malfunction of a certain structural element or group of elements is assumed. Then, a repair notification can be putted out to a human supervisor or inspector or a repair can be automatically initiated.

Hence, the robotic system has a self-protection configuration for instance to prevent, compensate or counteract system overload or wrong or inappropriate working position, undesired or disproportionate touch or collision. Also objects to be manipulated by a robot can be protected, in particular to prevent that measured parts are damaged, e.g. scratched, whereby a feedback loop can be integrated, e.g. a desired or predefined push/touch force for a dedicated work can be compared to the actual force or can be considered in context of the job which has to be done by the robot to prevent e.g. too much load or react to a too strong or blocked movable object such as a window or door. As said, also additional information about the environment or an object can be gained, e.g. a weight of an object to be lifted.

A skilled person is aware of the fact that details, which are here shown and explained with respect to different embodiments, can also be combined in other permutations if not indicated otherwise.

## Claims

1. Robot drive module (1) for driving a rotary joint movement of a robot, particularly a metrology robot and/or humanoid robot, wherein the robot drive module (1) comprises
• a rotary drive comprising a motor circuit board (12), a stator (11o), and a rotor (2, 2o), wherein the rotor (2, 2o) is configured to rotate - controlled by the motor circuit board - relative to the stator (11o) about an axis of rotation (9),
• a gearbox (3, 3') configured to transform - according to a defined gear ratio - a rotary motion of the rotor (2, 2o) about the axis of rotation (9) into a rotary motion of a gearbox output component about the axis of rotation, wherein - axially with respect to the axis of rotation (9) - the motor circuit board (12) and the stator (11o) are arranged on one side of the gearbox (3, 3'), denoted gearbox input side (I), and the gearbox output component engages the gearbox (3, 3') from the other side of the gearbox (3, 3'), denoted gearbox output side (O), and
• a rotary encoder (6, 6o) configured to detect a rotation of the gearbox output component about the axis of rotation (9),
**characterized in that**
• the robot drive module (1) comprises a connecting part (5, 5') which extends from the gearbox output side (O) to the gearbox input side (I) and is configured to pick up the rotation of the gearbox output component in a rigid manner, thereby providing rotation of the connecting part (5, 5') identical to the rotation of the gearbox output component, and
• the rotary encoder (6, 6o) is arranged on the gearbox input side and configured to detect a rotation of the connecting part (5, 5') about the axis of rotation (9).

2. Robot drive module (1) according to any one of claims 1,
**characterized in that**
the rotary encoder (6, 6o) comprises a code carrier (8, 8o) and a sensor arrangement (7, 7o), wherein the code carrier (8, 8o) and the sensor arrangement are rotatable with respect to one another about the axis of rotation (9), and the sensor arrangement is configured to provide derivation of a rotary position or a change in rotary position of the code carrier (8, 8o) relative to the axis of rotation (9), wherein the code carrier (8, 8o) is arranged on a distal end of the connecting part (5, 5') on the gearbox input side (I), in particular wherein the code carrier (8, 8o) is a glass circular encoder and the sensor arrangement (7, 7o) is configured for optical detection of the code carrier (8, 8o).

3. Robot drive module (1) according to claim 2,
**characterized in that**
the sensor arrangement (7, 7o) is arranged on the motor circuit board (12).

4. Robot drive module (1) according to any one of the preceding claims,
**characterized in that**
the connecting part (5, 5') extends past the gearbox (3, 3') in an area located radially on the inside of the gearbox (3, 3').

5. Robot drive module (1) according to any one of the preceding claims,
**characterized in that**
the robot drive module (1) comprises a hollow part (5') axially extending through the drive module and being located radially on the inside of the gearbox (3, 3'), in particular with a magnet at one distal end of the hollow part (5') and a hall sensor on the motor circuit board (12) for measuring an absolute rotary angle.

6. Robot drive module (1) according to any one of the preceding claims,
**characterized in that**
• the robot drive module (1) comprises a further rotary drive comprising a stator (11i) and a rotor (2i), wherein the further rotary drive's rotor (2i) is configured to rotate relative to the further rotary drive's stator (11i) about the axis of rotation (9), wherein
□ the further rotary drive's stator (11i) is arranged on a side of the motor circuit board (12) facing away from the gearbox (3, 3') and the rotary drive's stator (11o) is arranged on a side of the motor circuit board (12) facing towards the gearbox (3, 3'),
□ the further rotary drive's rotor (2i) axially extends from the gearbox input side (I) to the gearbox output side (O) in an area located radially on the inside of the rotary drive, and
□ the robot drive module (1) comprises a further rotary encoder (6i) configured to provide detection of a rotation -about the axis of rotation (9)- of a rotating component driven by the further rotary drive, wherein a sensing arrangement (7i) of the further rotary encoder (6i) is arranged on the motor circuit board (12) on the side of the motor circuit board facing away from the gearbox (3, 3'),
and/or
• the robot drive module (1) comprises a rotation sensor configured to provide control data for driving movement of the rotor (2i), in particular wherein the rotation sensor is embodied as hall sensor or wherein the rotation sensor is configured to provide the control data based on magnetic feedback from motor coils of the rotary drive, and/or
• the rotary drive is configured to use position information from the rotary encoder (6, 6o) to control movement of the rotor (2, 2o).

7. Robot drive module (1') for driving a rotary joint movement of a robot, particularly a metrology robot and/or humanoid robot, wherein the robot drive module (1') comprises
• two rotary drives, each of the two rotary drives comprising a stator (11o, 11i) and a rotor (2o, 2i) configured to rotate relative to a respective stator (11o, 11i), wherein the rotors (2o, 2i) of the two rotary drives are configured to rotate about a common axis of rotation (9), and
• a rotary encoder arrangement configured to detect an associated rotation for each of the two rotary drives,
**characterized in that**
• the robot drive module (1') comprises a motor circuit board (12) configured to control both of the two rotary drives independently from each other,
• the motor circuit board (12) and the two rotary drives are arranged that - axially with respect to the axis of rotation (9) - the stator (11i) of one of the two rotary drives, denoted inner rotary drive, is arranged on one side of the motor circuit board (12), denoted inner side, and the stator (11o) of the other of the two rotary drives, denoted outer rotary drive, is arranged on the other side of the motor circuit board (12), denoted outer side,
• a rotating component driven by the inner rotary drive axially extending from the inner side to the outer side in an area located radially on the inside of the outer rotary drive,
• the rotary encoder arrangement comprises two rotary encoders (6o, 6i), wherein
o one of the two rotary encoders (6i) is configured to provide detection of a rotation - about the axis of rotation (9) - of the rotating component driven by the inner rotary drive, wherein a sensor arrangement (7i) of one of the two rotary encoders is arranged on the motor circuit board (12) on the inner side, and
o the other of the two rotary encoders (6o) is configured to provide detection of a rotation - about the axis of rotation (9)- of a rotating component driven by the outer rotary drive, wherein a sensor arrangement (7o) of the other of the two rotary encoders is arranged on the motor circuit board (12) on the outer side.

8. Robot drive module (1') according to claim 7,
**characterized in that**
each of the two rotary encoders (6o, 6i) comprises a code carrier (8o, 8i), wherein the code carrier (8o, 8i) is rotatable with respect to the motor circuit board (12) about the axis of rotation (9) and the sensor arrangement (7o, 7i) is configured to provide derivation of a rotary position or a change in rotary position of the code carrier (8o, 8i) relative to the axis of rotation (9), in particular wherein the code carrier (8o, 8i) is a glass circular encoder and the sensor arrangement (7o, 7i) is configured for optical detection of the code carrier (8o, 8i) .

9. Robot drive module (1') according to one of claims 7 or 8,
**characterized in that**
the robot drive module (1') comprises a hollow part (13s) axially extending completely through the robot drive module (1') and being located radially on the inside of the inner rotary drive, in particular with a magnet at one distal end of the hollow part (13s) and a hall sensor on the motor circuit board (12) for measuring an absolute rotary angle whereby the rotary drive is configured to use position information from the hall sensor to control movement of the rotor.

10. Robot drive module (1') according to one of claims 7 to 9,
**characterized in that**
• at least one of the rotary drives is configured to use position information from the rotary encoder (6o, 6i) to control movement of the rotor (2o, 2i) and/or
• at least one of the rotary drives comprises a rotation sensor configured to provide control data for driving movement of the rotor (2o, 2i), in particular wherein the rotation sensor is embodied as hall sensor and/or wherein the rotation sensor is configured to provide the control data based on magnetic feedback from motor coils of the rotary drive.

11. Method for a robot with a robot drive module (1, 1') having a code carrier (8, 8o, 8i) and a sensor arrangement (7, 7o, 7i) according to claim 2 or 7 or any one of the preceding claims depending on claim 2 or 7, with
• determining a change in relative position of the sensor arrangement (7, 7o, 7i) and the code carrier (8, 8o, 8i) with respect to each other and, based thereof, determining a measurement value (Δx, Δy, Δz, pitch, roll) providing information on a deflection and/or rotation amount of the code carrier (8, 8o, 8i) in a radial and/or axial direction with respect to the axis of rotation (9), in particular on at least one of
□ a deflection of the code carrier (8, 8o, 8i) in a radial direction relative to the axis of rotation (9),
□ a deflection of the code carrier (8, 8o, 8i) in the direction of the axis of rotation (9), and/or
□ a tilting (pitch, roll) of the code carrier (8, 8o, 8i) with respect to the axis of rotation (9),
• determining a force (F_{z}) and torque moments (Tₓ, T_{y}) exerted on the drive output axis based on the measurement value (Δx, Δy, Δz, pitch, roll) and a deformation model of the robot drive module (1, 1').

12. Method according to claim 11,
**characterized by**
monitoring a history of the measurement value (Δx, Δy, Δz, pitch, roll) or of a value derived therefrom and, based thereof, in particular as a function of a threshold criterion, triggering a specific behavior/reaction of the robot, in particular a movement and/or torque reduction, in particular to compensate the exerted force (F_{z}) and/or torque moments (Tₓ, T_{y}).

13. Method according to claim 11 or 12,
**characterized by**
a self-calibration of the deformation model and/or a transfer function between measurement value (Δx, Δy, Δz, pitch, roll) and force (F_{z}) and/or torque moments (Tₓ, T_{y}) with
• positioning a known mass coupled to the robot drive module in different known positions relative to the robot drive module (1, 1'),
• determining the change in relative position and/or the measurement value (Δx, Δy, Δz, pitch, roll) in each relative position and
• deriving therefrom an absolute force or torque value.

14. Method according to any one of claims 11 to 13,
**characterized in that**
deriving an information
• about health of a mechanical component of the robot based on the determined measurement value (Δx, Δy, Δz, pitch, roll) and/or
• about the environment, in particular to detect an obstacle, based on the detected exerted force (F_{z}) and moments (Tₓ, T_{y}) and adapting a programed behavior of the robot based on the information about the environment.

15. Computer programme product having computer-executable instructions implemented for performing the method according to claim 11 on an electronic system controller of a robot.
